# FASCICULE DE BREVET EUROPEEN

(11) **EP 2 875 220 B1**
(45) Date de publication et mention de la délivrance du brevet: **18.04.2018**
(21) Numéro de dépôt: 13762241.1
(22) Date de dépôt: 28.06.2013
(51) Int. Cl.: F01P 11/02

(54) **RESERVOIR DE DEGAZAGE, ET SYSTEME DE REFROIDISSEMENT DE VEHICULE AUTOMOBILE EQUIPE D'UN TEL RESERVOIR DE DEGAZAGE**
ENTLÜFTUNGSTANK SOWIE MOTORFAHRZEUGKÜHLSYSTEM MIT SOLCH EINEM ENTLÜFTUNGSTANK
VENTING TANK, AND MOTOR-VEHICLE COOLING SYSTEM PROVIDED WITH SUCH A VENTING TANK

(30) Priorité: 19.07.2012 FR 1256987
(43) Date de publication de la demande: 27.05.2015
(73) Titulaire: Illinois Tool Works Inc., Glenview, IL 60025 (US)
(72) Inventeur: IAFRATE, Serge, F-01090 Montmerle sur Saône (FR)
(74) Mandataire: Lavoix
(86) Numéro de dépôt international: PCT/IB2013/055317
(87) Numéro de publication internationale: WO 2014/013365

(56) Documents cités:
- EP-A1- 2 042 704
- EP-B1- 1 554 476
- FR-A1- 2 866 064
- FR-A1- 2 915 516
- US-A- 2 023 456

## Description

La présente invention concerne un réservoir de dégazage, adapté pour équiper un système de refroidissement de véhicule automobile. L'invention concerne également un système de refroidissement de véhicule automobile, en particulier un système de refroidissement d'un moteur de véhicule automobile, équipé d'un tel réservoir de dégazage.

De manière classique, un système de refroidissement comprend un circuit caloporteur formé par différentes conduites, également appelées durites, qui s'étendent au voisinage du moteur et du radiateur du véhicule automobile. Le système comprend en outre un réservoir de dégazage, également appelé vase d'expansion, délimitant un volume intérieur destiné à recevoir un liquide de refroidissement à dégazer.

En pratique, le réservoir de dégazage a deux fonctions principales. La première consiste à permettre la dilatation thermique du liquide de refroidissement, en ajoutant un volume d'air au dessus du niveau maximal de liquide dans le réservoir. La deuxième consiste à dégazer le circuit caloporteur. En effet, si le circuit est exempt de gaz après fabrication et avant mise en service du véhicule, il existe un risque d'engazage du circuit lorsque le véhicule est en service, du fait par exemple d'éventuelles fuites légères en entrée de la pompe à eau ou d'usure du joint de culasse. Ainsi, en détournant une partie du circuit caloporteur vers le réservoir de dégazage, le liquide de refroidissement peut être dégazé.

FR-A-2 913 374 décrit un système de refroidissement équipé d'un réservoir de dégazage. Le réservoir comporte une paroi inférieure et un orifice d'entrée de liquide ménagé dans cette paroi inférieure. Le positionnement de l'orifice d'entrée en partie inférieure et non en partie supérieure du réservoir résulte de contraintes opérationnelles du système de refroidissement. Ainsi, l'orifice d'entrée est en permanence immergé sous un niveau minimum de liquide dans le réservoir. Une barrière verticale s'étend dans le réservoir depuis la paroi inférieure, face au flux de liquide entrant par l'orifice d'entée. La présence de cette barrière permet de freiner le flux, mais un risque d'émulsion et de création de vortex existe.

FR-A-2 866 064 décrit un autre système de refroidissement équipé d'un réservoir de dégazage. Sur la figure 4, le réservoir comporte un tube de guidage recevant du liquide de refroidissement en provenance à la fois d'une tubulure supérieure et d'une tubulure inférieure. Autrement dit, le tube de guidage guide le liquide de refroidissement à la fois depuis un orifice d'entrée supérieur et depuis un orifice d'entrée inférieur. Le flux entrant dans le tube par l'orifice supérieur est dirigé vers un trou disposé en partie supérieur du tube et vers un trou disposé en partie inférieure du tube. Le flux de liquide entrant par l'orifice supérieur est expulsé par chacun de ces trous sous forme d'un jet à l'intérieur de l'enceinte du réservoir. Le jet aérien expulsé par le trou supérieur perturbe le liquide dans le réservoir. Le jet sous-marin expulsé par le trou inférieur est dirigé vers la paroi inférieure du réservoir, dans la continuité du flux arrivant dans le tube par la tubulure supérieure. Les deux flux entrants supérieur et inférieur pénètrent dans le même tube en sens opposé, ce qui est défavorable à la tranquillisation du liquide de refroidissement, et donc à l'efficacité du dégazage dans le réservoir. La majeure partie des deux flux entrants est évacué par le trou inférieur, avec une vitesse importante susceptible de créer une émulsion et/ou un vortex dans le liquide de refroidissement.

EP-A1-2042 704 décrit un dispositif similaire à celui de FR-A1-2 866 064 et en l'espèce une boîte de dégazage d'un liquide. La boîte comprend une enceinte fermée, avec une entrée d'alimentation supérieure et une entrée d'alimentation inférieure, un tube plongeur s'étendant au sein de l'enceinte à partir de l'entrée supérieure. Ce dispositif comprend également une sortie ménagée dans le fond de l'enceinte et un orifice supplémentaire d'alimentation de la chambre dont est muni le tube plongeur pour former un jet aérien dans l'enceinte. Ce dispositif présente ainsi les mêmes inconvénients que celui de FR-A1-2 866 064.

US-2,023,456 décrit un dispositif de type condensateur, destiné à piéger à la fois un flux de liquide et un flux de vapeur dans un système de refroidissement d'un moteur. Dans le condensateur, une cloche est positionnée en sortie pour autoriser exclusivement une sortie de liquide condensé.

Le but de l'invention est de proposer un réservoir de dégazage, comportant une entrée de liquide de refroidissement en partie inférieure, amélioré par rapport aux réservoirs existants.

A cet effet, la présente invention a pour objet un réservoir de dégazage conforme à la revendication 1.

Ainsi, l'invention permet d'assurer un fonctionnement satisfaisant du réservoir de dégazage, quelles que soient les conditions de circulation du véhicule. L'organe de guidage du flux permet de réaliser une fontaine interne au réservoir, empêchant l'émulsion et la création de vortex dans le liquide de refroidissement. L'orifice d'entrée de liquide est immergé en permanence sous l'organe de guidage, qui présente une forme de cloche. Cet organe de guidage permet également de diminuer la vitesse d'écoulement du flux de liquide et donc de permettre un meilleur dégazage, ainsi que de supprimer toute orientation préférentielle du flux autour de l'orifice d'entrée et donc de limiter la création de vortex internes au liquide dans le réservoir.

Lorsque le réservoir comprend plusieurs orifices d'entrée disposés sous le niveau minimal de liquide, au moins certains de ces orifices peuvent être coiffés par un organe de guidage. De préférence, le réservoir comprend un organe de guidage disposé en regard de chacun de ces orifices d'entrée.

D'autres caractéristiques avantageuses de l'invention sont définies dans les revendications 2 à 6.

L'invention a également pour objet un système de refroidissement de véhicule automobile défini dans la revendication 7.

L'invention sera mieux comprise à la lecture de la description qui va suivre, donnée uniquement à titre d'exemple non limitatif et faite en référence aux dessins annexés sur lesquels :
- la figure 1 est une vue en perspective d'un réservoir de dégazage qui n'est pas conforme à l'invention, adapté pour recevoir un liquide de refroidissement circulant dans un système de refroidissement ;
- la figure 2 est une vue de côté du réservoir selon la flèche II à la figure 1 ;
- la figure 3 est une coupe du réservoir selon la ligne III-III à la figure 2 ;
- la figure 4 est une coupe dans le plan IV à la figure 1, montrant en perspective l'intérieur de la coque inférieure du réservoir ; et
- la figure 5 est une coupe analogue à la figure 3 d'un réservoir de dégazage conforme à l'invention.

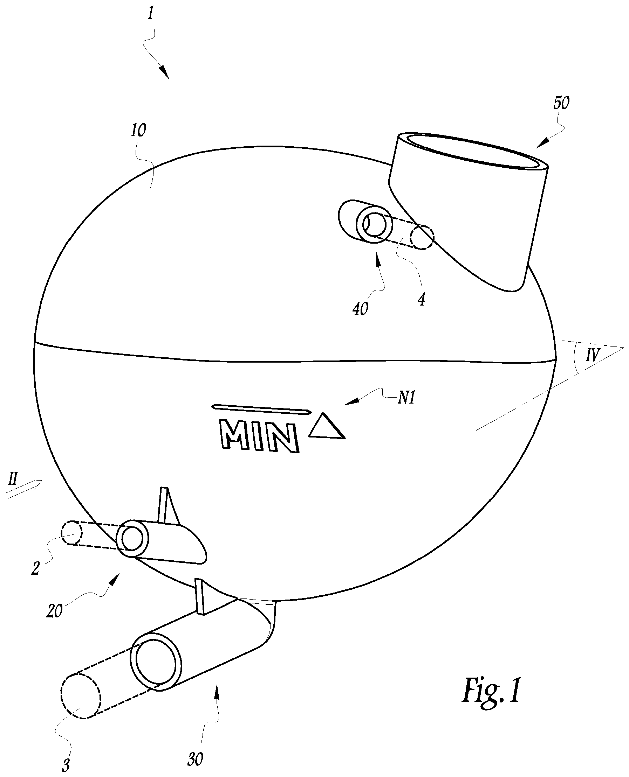

Sur les figures 1 à 4 est représenté un réservoir de dégazage 10.

Ce réservoir 10 est adapté pour équiper un système de refroidissement 1 d'un moteur de véhicule automobile, partiellement représenté à la figure 1. Un exemple de système 1 est décrit dans FR-A-2 913 374.

Le système 1 comprend différents dispositifs, tel que le réservoir de dégazage 10, reliés par un circuit caloporteur dans lequel circule notamment un liquide de refroidissement L. Le circuit du système 1 comprend des conduites ou durites, telles que les conduites 2, 3 et 4 représentées partiellement et schématiquement en pointillés à la figure 1. Le système 1 et le réservoir 10 sont disposés dans le compartiment moteur du véhicule.

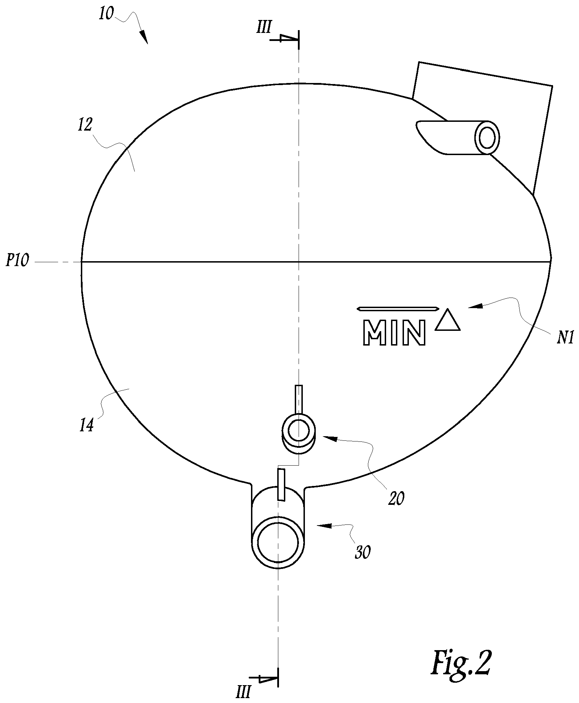

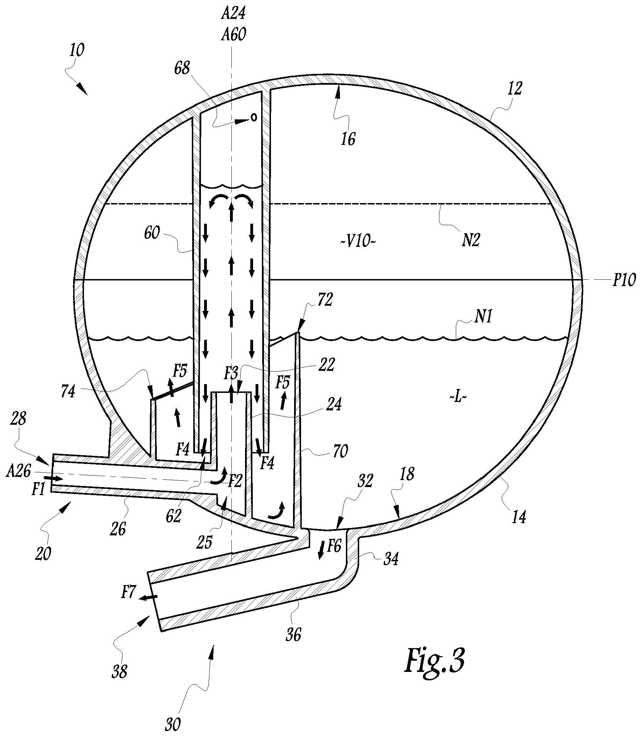

Le réservoir 10 comprend une coque supérieure 12 et une coque inférieure 14 délimitant un volume intérieur V10. Le réservoir 10 présente une forme globalement ovoïde. En alternative, le réservoir 10 peut présenter toute autre forme adaptée à la présente application. Les coques 12 et 14 sont jointes de manière étanche au niveau d'un plan d'assemblage P10, correspondant à un plan médian sensiblement horizontal sur les figures 2 et 3. Chaque coque 12 et 14 comporte une paroi intérieure concave, respectivement 16 et 18. Les parois 16 et 18 sont raccordées de manière étanche au niveau du plan P10.

Le plan horizontal P10 définit une position théorique de référence du réservoir 10, lorsque les roues du véhicule reposent sur un sol sensiblement horizontal. Comme montré à la figure 3, on définit un niveau minimal N1 et un niveau maximal N2 de liquide L dans le volume interne V10 du réservoir 10. Sur l'exemple des figures, le niveau minimal N1 est situé en dessous du plan P10, tandis que le niveau maximal N2 est situé au dessus du plan P10, parallèles à ce plan P10 dans la position de référence du réservoir 10. En alternative, la position des niveaux N1 et N2 peut dépendre de l'application visée. La différence de liquide L entre les niveaux N1 et N2 est couramment dénommée « consommable ». De manière pratique, le niveau minimal N1 peut être repéré sur une surface externe de la coque inférieure 14, comme montré aux figures 1 et 2. En complément, le niveau N2 peut également être repéré sur la coque supérieure 14.

Par la suite, afin de faciliter le repérage dans l'espace, les termes « supérieur, inférieur, vertical, horizontal » sont définis par rapport au plan horizontal de référence P10. En outre, les termes « interne, externe, entrée et sortie » sont définis par rapport au volume intérieur V10.

En pratique, l'inclinaison du réservoir 10 et/ou du niveau de liquide L peuvent varier lorsque le véhicule est en service, par exemple lors d'une accélération ou d'un freinage, dans les virages ou sur une route accidentée. Dans ce cas, les mouvements du liquide L présent dans le réservoir 10, notamment par rapport aux niveaux N1 et N2, sont susceptibles de perturber le fonctionnement du réservoir de dégazage 10. Comme détaillé ci-après, le réservoir 10 présente un fonctionnement satisfaisant quelles que soient les conditions de circulation du véhicule.

Le réservoir 10 comprend également des tubulures 20 et 30 formées sur la coque inférieure 14, ainsi que des tubulures 40 et 50 formées sur la coque supérieure 12. La tubulure 20 forme un moyen d'entrée de liquide L dans le réservoir 10, par exemple en provenance d'un radiateur voisin du moteur ou de la culasse du moteur, via la conduite 2. La tubulure 30, dite aussi pipe de mise en charge, forme un moyen de sortie de liquide L hors du réservoir 10, en direction du moteur 2, via la conduite 3. La tubulure 40 forme un moyen de liaison du réservoir 10 avec un autre dispositif du système 1, par exemple un thermostat voisin du radiateur, via la conduite 4. La tubulure 50 forme un moyen d'accès au volume intérieur V10 du réservoir 10. Cette tubulure 50 peut comprendre un filetage externe ou un taraudage interne, non représentés dans un but de simplification, permettant le vissage d'un bouchon.

La tubulure 20 d'entrée de liquide L s'étend à la fois dans le volume interne V10 et hors du volume interne V10 du réservoir 10. Depuis l'intérieur vers l'extérieur, la tubulure 20 comprend un orifice interne 22, un tube interne 24, un coude 25, un tube externe 26 et un orifice externe 28. Le coude 25 est situé à la jonction entre le tube interne 24 et le tube externe 26. Le tube interne 24 s'étend verticalement suivant un axe A24, depuis la paroi 18 dans le volume V10. Le tube externe 26 s'étend globalement horizontalement suivant un axe A26 dirigé vers le haut en s'éloignant de la coque 14 à l'extérieur du volume V10. Sur l'exemple des figures, les axes A24 et A26 sont inclinés d'un angle de 86 degrés au niveau du coude 25. En pratique, toute inclinaison entre les axes A24 et A26 est envisageable. L'orifice 22 d'entrée de liquide L dans le volume V10 est situé à l'extrémité supérieure du tube 24, sous le niveau minimal de liquide N1. Quelle que soit l'inclinaison du véhicule en service, le niveau N1 est maintenu au dessus de l'orifice 22 pour permettre un fonctionnement satisfaisant du réservoir 10 et du système 1. L'orifice 28 est situé à l'extrémité externe du tube 26, prévu pour être raccordé à la conduite 2 pour alimenter le réservoir 10 en liquide L.

La tubulure 30 de sortie de liquide L s'étend hors du volume interne V10 du réservoir 10. Depuis l'intérieur vers l'extérieur, la tubulure 30 comprend un orifice interne 32, une partie tubulaire coudée 34, un tube externe 36 et un orifice externe 38. L'orifice 32 de sortie de liquide L hors du volume V10 est ménagé dans la paroi inférieure 18, sous le niveau minimal de liquide N1. Cet orifice 32 est situé sensiblement au centre du réservoir 10, au point le plus bas du volume V10 dans la position de référence. En alternative, l'orifice 32 peut être situé en tout point de la paroi 18. L'orifice 38 est situé à l'extrémité externe du tube 36, qui est dirigé vers le bas en s'éloignant de la coque 14 et est prévu pour être raccordé à la conduite 3. En pratique, toute inclinaison du tube 36 par rapport à la coque 14 est envisageable.

Le réservoir 10 comprend également un organe de guidage 60 du liquide L pénétrant dans le volume V10 par l'orifice d'entrée 22. L'organe 60 présente une forme globalement tubulaire, centrée sur un axe A60 qui est coaxial à l'axe A24 du tube 24. L'organe 60 est disposé en regard de l'orifice d'entrée 22. L'organe 60 s'étend en direction de la paroi inférieure 18 depuis la paroi supérieure 16, jusqu'à une ouverture 62 située entre la paroi inférieure 18 et l'orifice 22. L'organe 60 forme ainsi une cloche qui entoure l'orifice d'entrée 22 et partiellement le tube 24, avec l'ouverture 62 qui est ouverte à 360 degrés autour des axes A24 et A60, de l'orifice 22 et du tube 24. Le diamètre de l'ouverture 62 autour de l'axe A60 est supérieur au diamètre de l'ouverture 22 et du tube 24 autour de l'axe A24. L'ouverture 62 est immergée en permanence sous le niveau minimal de liquide N1, quelle que soit l'inclinaison du véhicule et du réservoir 10.

De préférence, l'organe 60 comporte en outre un orifice traversant 68, ménagé à proximité de la paroi supérieure 16. Encore de préférence, cet orifice 68 est disposé en permanence au dessus du niveau maximal N2 de liquide L dans le volume intérieur V10 lorsque le véhicule est en service. L'orifice 68 permet l'équilibrage des pressions dans le volume V10, entre l'intérieur et l'extérieur de l'organe 60.

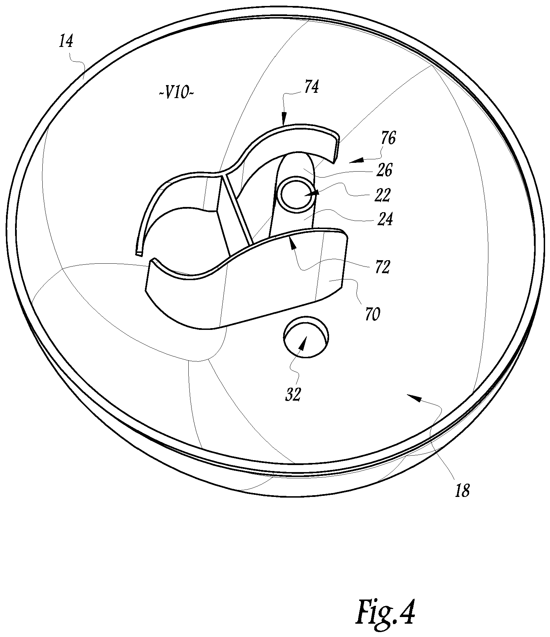

Le réservoir 10 comprend également une barrière 70, montrée aux figures 3 et 4. La barrière 70 s'étend dans le volume V10 depuis la paroi inférieure 18 jusqu'à des bords 72 et 74 qui présentent des hauteurs différentes. Une ouverture 76 est également ménagée dans la barrière 70, entre les bords 72 et 74. En d'autres termes, cette ouverture 76 correspond à une absence de barrière 70. La barrière 70 est dépourvue d'orifice ménagé dans sa masse directement entre l'orifice d'entrée 22 et l'orifice de sortie 32, en ligne droite entre ces deux orifices 22 et 32, notamment au niveau de la paroi inférieure 18. Excepté au niveau de cette ouverture 76, la barrière 70 entoure l'orifice 22, le tube 24, l'organe 60 et l'ouverture 62. Le bord 72 de la barrière 70 est interposé entre, d'une part, l'orifice d'entrée 22 et l'organe de guidage 60 et, d'autre part, l'orifice de sortie 32 de liquide L. Le bord 74 est situé à l'opposé du bord 72 et de l'orifice 32 par rapport au tube 24 et à l'organe 60. La hauteur du bord 72, mesurée verticalement par rapport à la paroi 18, est supérieure à la hauteur du bord 74. Dans la position de référence du réservoir 10, le bord 72 est sensiblement situé à la hauteur du niveau minimal N1.

En pratique, la fonction de dégazage du réservoir 10 doit être assurée quelles que soient les conditions de circulation du véhicule, c'est-à-dire qu'aucune bulle de gaz ne doit être incluse dans le liquide L au niveau de la tubulure de sortie 30. L'efficacité de dégazage sera d'autant meilleure que les inclusions d'air sont évitées à l'introduction du liquide L dans le réservoir 10, au niveau de la tubulure 20. En raison des faibles diamètres des tubes 26 et 24 appartenant à la tubulure 20 d'entrée de liquide L, notamment en comparaison avec la tubulure 30 et les conduites 2 et 3 du circuit, la vitesse du liquide L pénétrant dans le réservoir 10 est relativement élevée. Lorsque ce liquide L entre en contact avec des parties internes du réservoir 10, il a tendance à s'émulsionner.

Comme montré à la figure 3, le réservoir 10 est traversé par des flux F1, F2, F3, F4, F5, F6 et F7 de liquide de refroidissement L, lorsque le véhicule est en service et que le réservoir 10 assure ses fonctions de dilation thermique et de dégazage du liquide L.

Le flux F1 pénètre dans la tubulure 20 au niveau de l'orifice 28, avec une vitesse et un débit d'écoulement importants. Ce flux F1 est globalement dirigé vers le bas, sur l'exemple des figures, suivant l'axe A26 le long du tube 26. Le flux F2 effectue un virage au niveau du coude 25, en passant du tube 26 au tube 24. Le flux F2 remonte verticalement le long du tube 24 suivant l'axe A24. Le flux F3 émerge du tube 24 par l'orifice 22 d'entrée de liquide dans le volume V10. A ce stade, le flux F3 de liquide L quitte la tubulure 20 pour pénétrer dans le volume V10, suivant une direction verticale dirigée vers le haut et vers le niveau de liquide L. Sans la présence de l'organe 60, les flux F2 et F3 provoqueraient l'émulsion du liquide L et la création de vortex, susceptibles de ré-engazer le liquide L, dans le volume V10 du réservoir 10.

Grâce à la présence de l'organe 60, le flux F3 ne vient pas troubler le liquide L présent dans le réservoir 10. Le flux F3 remonte le long de l'organe 60 en direction de la paroi supérieure 16, jusqu'à une hauteur de liquide L qui est fonction du débit du flux F1 pénétrant dans la tubulure 20. L'organe 60 guide ensuite le flux F3, le long de ses parois internes, suivant le flux F4 dirigé contre la paroi inférieure 18, c'est-à-dire suivant une direction verticale dirigée vers le bas et opposée au flux F3 arrivant par l'orifice 22. Entre le flux F3 dirigé vers le haut et le flux F4 dirigé vers le bas, le liquide L est guidé suivant un arc à 180 degrés entre l'organe 60 et le tube 24, en direction de la paroi inférieure 18, jusqu'à l'ouverture 62.

En formant une fontaine interne avec les flux F2, F3 et F4, la tubulure 20 et l'organe 60 empêchent l'émulsion et la création de vortex dans le volume V10 du réservoir 10. Si une émulsion se produit au dessus de l'orifice 22 en raison de la vélocité des flux F2 et F3, cette émulsion est contenue par l'organe 60 de guidage du flux F4 vers le bas, de sorte que le liquide L n'est pas ré-engazé. Comme l'ouverture 62 de l'organe 60 est ménagée à 360 degrés autour de l'orifice 22 et du tube 24, le flux F4 ne présente pas d'orientation préférentielle et est réparti régulièrement autour du tube 24, ce qui évite la formation de vortex internes au liquide L contenu dans le volume V10. Du fait de l'augmentation de la section de passage de liquide L entre le tube 24 et l'organe 60, la vitesse d'écoulement du flux F4 est diminuée par rapport au flux F3, ce qui améliore l'efficacité de dégazage.

En interposant la barrière 70 entre l'ouverture 62 et l'orifice 32, le risque de ré-engazage du liquide L avant sa sortie du réservoir 10 par l'orifice 32 est encore réduit. Le flux F4 est dirigé vers la paroi 18, puis contre la barrière 70, puis se diffuse dans le volume V10 en formant un flux F5 guidé par cette barrière 70 sous le niveau minimal de liquide N1. Du fait de la configuration de cette barrière 70, le flux F5 est dirigé préférentiellement vers l'ouverture 76 et le bord 74 de plus faible hauteur que le bord 72. A ce stade, une éventuelle émulsion résultante de la vélocité des flux F2 et F3 est dissipée et le flux F5 contourne la barrière 70 pour se diriger vers l'orifice de sortie 32. Par ailleurs, si le réservoir 10 et/ou le niveau de liquide L sont inclinés d'un côté ou de l'autre, la position et la hauteur des bords 72 et 74 de la barrière 70 permettent de s'assurer que l'orifice 22, le tube 24 et l'ouverture 62 sont toujours immergés sous le niveau minimal de liquide N1.

Le flux F5 pénètre dans l'orifice 32 sous forme d'un flux F6 sortant du volume V10, puis s'échappe de la tubulure 30 par l'orifice 38 sous forme d'un flux F7.

Ainsi, le liquide de refroidissement L est dégazé dans le réservoir 10 en suivant les flux F1 à F7. Les tubulures 20 et 30, l'organe 60 et la barrière 70 forment ensemble des moyens de guidage des flux F1 à F7 de liquide L. La configuration de ces éléments 20, 30, 60 et 70 permet de s'assurer du fonctionnement correct du réservoir 10 quelles que soient les conditions de circulation du véhicule.

L'organe 60 est dépourvu d'un orifice d'entrée de liquide L depuis une partie supérieure du réservoir 10, notamment depuis la paroi supérieure 16, contrairement au réservoir décrit à la figure 4 de FR-A-2 866 064. Même dans le cas où le réservoir 10 comprend un orifice d'entrée de liquide L ménagé dans la paroi supérieure 16, ce flux supérieur ne pénètre pas dans l'organe 60 pour se mélanger avec les flux F3 et F4 provenant de l'orifice d'entrée 22. Autrement dit, ce flux supérieur pénètre dans le volume intérieur V10 du réservoir 10 sans pénétrer dans l'organe 60. Les flux entrants dits supérieur et inférieur sont alors séparés, ce qui favorise la tranquillisation du liquide de refroidissement L et augmente l'efficacité du dégazage dans le réservoir 10.

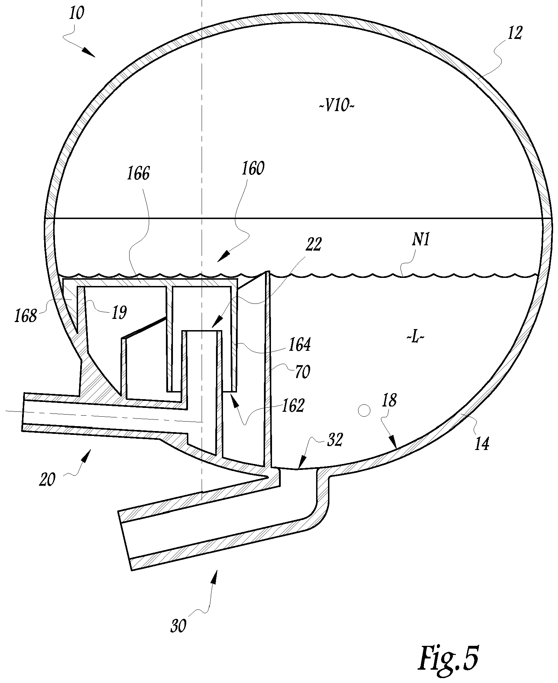

Sur la figure 5 est représenté un organe 160 appartenant à un mode de réalisation d'un réservoir de dégazage 10 selon l'invention.

Certains éléments constitutifs du réservoir 10 sont identiques à ceux de l'exemple des figures 1-4, non conforme à l'invention, décrit plus haut, et portent les mêmes références numériques. Les flux de liquide L ne sont pas représentés à la figure 5 dans un but de simplification, mais ces flux sont analogues représentés à la figure 3. La principale différence avec l'exemple des figures 1-4, non conforme à l'invention, concerne l'organe de guidage 160, qui présente un fonctionnement similaire, mais une structure différente, en comparaison avec l'organe de guidage 60 décrit plus haut

L'organe 160 comporte une ouverture 162, un tube 164, une plaque 166 et une partie d'ancrage 168. L'organe 160 s'étend entre l'orifice d'entrée 22 et le niveau minimal de liquide N1. La plaque 166 est fixée, au niveau de la partie d"ancrage 168, à une partie d'ancrage 19 complémentaire ménagée latéralement sur la paroi inférieure 18 du réservoir 10. Les parties d'ancrage 19 et 168 peuvent présenter toute configuration complémentaire adaptée à la présente application. Le tube 164 s'étend depuis la plaque 166 en direction de la paroi inférieure 18 du réservoir 10. Le tube 164 est ouvert au niveau de l'ouverture 162 et fermé au niveau de la plaque 166. Le tube 164 forme une cloche qui rabat le flux de liquide L en direction de la paroi inférieure 18 au réservoir 10, le long du tube 24.

Par ailleurs, le système 1 ou le réservoir 10 peut être conformé différemment des figures sans sortir du cadre de l'invention. En particulier, les tubulures 20 et 30, l'organe 60 ou 160 et/ou la barrière 70 peuvent chacun présenter une configuration différente sans sortir du cadre de l'invention.

En variante non représentée, l'organe de guidage peut présenter toute forme en cloche adaptée pour rabattre le flux F4 de liquide L contre la paroi inférieure 18 du réservoir 10. Cet organe de guidage s'étend au moins en partie entre la paroi inférieure 18 et l'orifice d'entrée 22, sous le niveau minimal de liquide N1.

Selon une autre variante non représentée, le tube 24 et l'organe de guidage 60 ou 160 peuvent être plus rapprochés du centre du réservoir 10, tandis que l'orifice 32 est légèrement décalé du centre, en comparaison avec les figures.

Selon une autre variante non représentée, les axes A24 et A60 peuvent être légèrement décalés et non strictement coaxiaux.

Selon une autre variante non représentée, le réservoir 10 ne comporte pas de barrière 70. Dans ce cas, la présence de l'organe 60 ou 160 suffit pour guider le flux de liquide L, tout en empêchant l'émulsion et la création de vortex.

Selon une autre variante non représentée, le réservoir 10 peut présenter une forme autre qu'ovoïde, par exemple sphérique ou quelconque dans le cadre de la géométrie indiquée dans la revendication 1. Selon une autre variante non représentée, une tubulure 40 peut être formée sur la coque inférieure 14 et constituer une entrée de liquide additionnelle dans le réservoir 10.

En pratique, le réservoir de dégazage 10 selon l'invention peut comprendre plusieurs tubulures, orifices d'entrée 22 et/ou orifices de sortie 32 prévus du côté de la coque inférieure 14. Autrement dit, le réservoir 10 selon l'invention comprend au moins un orifice d'entrée 22 et au moins un orifice de sortie 32 de liquide de refroidissement L disposés sous le niveau minimal de liquide N1 lorsque le véhicule est en service. Dans ce cas, au moins certains des orifices d'entrée 22, de préférence chaque orifice d'entrée 22, est associé à son propre organe de guidage 60 ou 160, disposé en regard de cet orifice d'entrée 22.

## Revendications

1. Réservoir de dégazage (10), adapté pour équiper un système de refroidissement (1) de véhicule automobile et comprenant une coque supérieure (12) et une coque inférieure (14) comportant respectivement une paroi supérieure (16) intérieure concave et une paroi inférieure (18) intérieure concave, la paroi supérieure (16) et la paroi inférieure (18) étant raccordées de manière étanche au niveau d'un plan d'assemblage (P10), les coques délimitant un volume intérieur (V10) destiné à recevoir un liquide de refroidissement (L), le réservoir de dégazage (10) comprenant :
- un tube d'entrée (24) de liquide (L), qui s'étend dans le volume intérieur (V10) depuis la paroi inférieure,
- au moins un orifice d'entrée (22) de liquide de refroidissement (L), situé à une extrémité supérieure du tube d'entrée,
- au moins un orifice de sortie (32) de liquide de refroidissement (L), l'orifice d'entrée et l'orifice de sortie étant disposés sous un niveau minimal de liquide (N1) lorsque le véhicule est en service, le ou chaque orifice de sortie (32) étant ménagé dans la paroi inférieure (18), et
- en regard de l'orifice d'entrée (22) ou d'au moins certains des orifices d'entrée (22), un organe (160) de guidage, qui, lorsque du liquide de refroidissement (L) pénètre dans le volume intérieur (V10) par l'orifice d'entrée (22) suivant un premier flux (F3), est apte à guider le liquide de refroidissement suivant un deuxième flux (F4) dirigé vers la paroi inférieure (18) à l'opposé du premier flux (F3), l'organe de guidage (160) comporte un tube (164) formant une cloche,
dans lequel lorsque du liquide de refroidissement (L) pénètre dans le volume intérieur (V10) par l'orifice d'entrée (22) suivant le premier flux (F3), le liquide de refroidissement est guidé par la cloche en formant un arc à 180 degrés entre le premier flux et le deuxième flux,
**caractérisé en ce que** l'organe de guidage (160) comporte une plaque (166) qui est ancrée à une partie latérale (19) de la paroi inférieure (18) et depuis laquelle s'étend le tube (164) en direction de la paroi inférieure (18), le tube étant fermé au niveau de la plaque (166).

2. Réservoir de dégazage (10) selon la revendication 1, **caractérisé en ce que** la cloche de l'organe de guidage (160) comporte une ouverture (162) située entre la paroi inférieure (18) et l'orifice d'entrée (22) sous le niveau minimal de liquide (N1).

3. Réservoir de dégazage (10) selon la revendication 2, **caractérisé en ce que** l'ouverture (162) est ouverte à 360 degrés autour de l'orifice d'entrée (22).

4. Réservoir de dégazage (10) selon l'une des revendications précédentes, **caractérisé en ce qu'**il comprend une barrière (70) qui s'étend dans le volume intérieur (V10) depuis la paroi inférieure (18) entre, d'une part, l'orifice d'entrée (22) et l'organe de guidage (160) et, d'autre part, l'orifice de sortie (32).

5. Réservoir de dégazage (10) selon l'une des revendications précédentes, **caractérisé en ce qu'**il comprend une tubulure (20), comprenant un tube externe (26) et le tube d'entrée (24), lesquels s'étendent de part et d'autre de la paroi inférieure (18), respectivement hors du volume intérieur (V10) et dans le volume intérieur (V10) jusqu'à l'orifice d'entrée (22).

6. Réservoir de dégazage (10) selon l'une des revendications précédentes, **caractérisé en ce qu'**il comprend plusieurs orifices d'entrée (22) et plusieurs organes de guidage (160), chacun disposé en regard d'un des orifices d'entrée (22).

7. Système de refroidissement (1) de véhicule automobile, **caractérisé en ce qu'**il est équipé d'un réservoir de dégazage (10) selon l'une des revendications précédentes.

## Patentansprüche

1. Entlüftungsbehälter (10), welcher zur Ausrüstung eines Kühlsystems (1) eines Kraftfahrzeugs geeignet ist und eine obere Schale (12) und eine untere Schale (14) umfasst, die eine konkave innere obere Wand (16) bzw. eine konkave innere untere Wand (18) aufweisen, wobei die obere Wand (16) und die innere Wand (18) an einer Fügeebene (P10) dicht miteinander verbunden sind, wobei die Schalen ein Innenvolumen (V10) begrenzen, das dazu bestimmt ist, eine Kühlflüssigkeit (L) aufzunehmen, wobei der Entlüftungsbehälter (10) umfasst:
- ein Eintrittsrohr (24) für Flüssigkeit (L), welches sich von der unteren Wand aus in das Innenvolumen (V10) erstreckt,
- wenigstens eine Eintrittsöffnung (22) für Kühlflüssigkeit (L), die sich an einem oberen Ende des Eintrittsrohres befindet,
- wenigstens eine Austrittsöffnung (32) für Kühlflüssigkeit (L), wobei die Eintrittsöffnung und die Austrittsöffnung unter einem minimalen Flüssigkeitspegel (N1) angeordnet sind, wenn das Fahrzeug in Betrieb ist, wobei die oder jede Austrittsöffnung (32) in der unteren Wand (18) ausgebildet ist, und
- gegenüber der Eintrittsöffnung (22) oder wenigstens einigen der Eintrittsöffnungen (22) ein Führungsorgan (160), welches, wenn Kühlflüssigkeit (L) über die Eintrittsöffnung (22) in einem ersten Strom (F3) in das Innenvolumen (V10) eindringt, geeignet ist, die Kühlflüssigkeit in einem zweiten Strom (F4), der zu der unteren Wand (18) hin gerichtet ist, entgegengesetzt zu dem ersten Strom (F3) zu führen, das Führungsorgan (160) ein Rohr (164) aufweist, das eine Glocke bildet,
wobei, wenn Kühlflüssigkeit (L) über die Eintrittsöffnung (22) in einem ersten Strom (F3) in das Innenvolumen (V10) eindringt, die Kühlflüssigkeit von der Glocke geführt wird, indem sie einen Bogen von 180 Grad zwischen dem ersten Strom und dem zweiten Strom bildet,
**dadurch gekennzeichnet, dass** das Führungsorgan (160) eine Platte (166) aufweist, die an einem seitlichen Teil (19) der unteren Wand (18) verankert ist und von der aus sich das Rohr (164) in Richtung der unteren Wand (18) erstreckt, wobei das Rohr an der Platte (166) geschlossen ist.

2. Entlüftungsbehälter (10) nach Anspruch 1, **dadurch gekennzeichnet, dass** die Glocke des Führungsorgans (160) eine Öffnung (162) aufweist, die sich zwischen der unteren Wand (18) und der Eintrittsöffnung (22) unter dem minimalen Flüssigkeitspegel (N1) befindet.

3. Entlüftungsbehälter (10) nach Anspruch 2, **dadurch gekennzeichnet, dass** sich die Öffnung (162) über 360 Grad um die Eintrittsöffnung (22) herum erstreckt.

4. Entlüftungsbehälter (10) nach einem der vorhergehenden Ansprüche, **dadurch gekennzeichnet, dass** er eine Barriere (70) umfasst, die sich in dem Innenvolumen (V10) von der unteren Wand (18) aus zwischen der Eintrittsöffnung (22) und dem Führungsorgan (160) einerseits und der Austrittsöffnung (32) andererseits erstreckt.

5. Entlüftungsbehälter (10) nach einem der vorhergehenden Ansprüche, **dadurch gekennzeichnet, dass** er einen Rohrstutzen (20) umfasst, der ein äußeres Rohr (26) und das Eintrittsrohr (24) umfasst, welche sich beiderseits der unteren Wand (18) außerhalb des Innenvolumens (V10) bzw. in dem Innenvolumen (V10) bis zur Eintrittsöffnung (22) erstrecken.

6. Entlüftungsbehälter (10) nach einem der vorhergehenden Ansprüche, **dadurch gekennzeichnet, dass** er mehrere Eintrittsöffnungen (22) und mehrere Führungsorgane (160), die jeweils gegenüber einer der Eintrittsöffnungen (22) angeordnet sind, umfasst.

7. Kühlsystem (1) eines Kraftfahrzeugs, **dadurch gekennzeichnet, dass** es mit einem Entlüftungsbehälter (10) nach einem der vorhergehenden Ansprüche ausgerüstet ist.

## Claims

1. Venting tank (10) adapted to equip a motor vehicle cooling system (1) and comprising an upper shell (12) and a lower shell (14) respectively comprising a concave inner upper wall (16) and a concave inner lower wall (18), the upper wall (16) and the lower wall (18) being connected in a sealed manner at an assembly plane (P10), the shells delimiting an inner volume (V10) intended to receive a cooling liquid (L), the venting tank (10) comprising:
- an inlet tube (24) for liquid (L) that extends into the inner volume (V10) from the lower wall,
- at least one inlet orifice (22) for cooling liquid (L) that is situated at an upper end of the inlet tube,
- at least one outlet orifice (32) for cooling liquid (L), the inlet orifice and the outlet orifice being arranged below a minimum liquid level (N1) when the vehicle is in service, the or each outlet orifice (32) being formed in the lower wall (18), and
- opposite the inlet orifice (22) or at least certain of the inlet orifices (22), a guide member (160) which, when cooling liquid (L) enters the inner volume (V10) through the inlet orifice (22) with a first flow (F3), is able to guide the cooling liquid with a second flow (F4) directed towards the lower wall (18) counter to the first flow (F3), the guide member (160) comprises a tube (164) forming a bell,
in which, when cooling liquid (L) enters the inner volume (V10) through the inlet orifice (22) with the first flow (F3), the cooling liquid is guided by the bell while forming a 180-degree arc between the first flow and the second flow,
**characterized in that** the guide member (160) comprises a plate (166) which is anchored to a lateral part (19) of the lower wall (18) and from which the tube (164) extends in the direction of the lower wall (18), the tube being closed at the plate (166).

2. Venting tank (10) according to Claim 1, **characterized in that** the bell of the guide member (160) comprises an opening (162) situated between the lower wall (18) and the inlet orifice (22) below the minimum liquid level (N1).

3. Venting tank (10) according to Claim 2, **characterized in that** the opening (162) is open at 360 degrees around the inlet orifice (22).

4. Venting tank (10) according to one of the preceding claims, **characterized in that** it comprises a barrier (70) which extends into the inner volume (V10) from the lower wall (18) between, on the one hand, the inlet orifice (22) and the guide member (160) and, on the other hand, the outlet orifice (32).

5. Venting tank (10) according to one of the preceding claims, **characterized in that** it comprises a duct (20), comprising an external tube (26) and the inlet tube (24), which extend on either side of the lower wall (18), respectively out of the inner volume (V10) and into the inner volume (V10) as far as the inlet orifice (22).

6. Venting tank (10) according to one of the preceding claims, **characterized in that** it comprises a plurality of inlet orifices (22) and a plurality of guide members (160), each arranged opposite one of the inlet orifices (22).

7. Motor vehicle cooling system (1), **characterized in that** it is equipped with a venting tank (10) according to one of the preceding claims.
